# EUROPEAN PATENT APPLICATION

(11) **EP 1 905 795 A1**
(43) Date of publication of application: **02.04.2008**
(21) Application number: 06781628.0
(22) Date of filing: 19.07.2006
(51) Int. Cl.: C08G 77/06

(54) **POLYSILOXANE AND METHOD FOR PRODUCING SAME**

(30) Priority: 19.07.2005 JP 2005208902
(71) Applicant: Dow Corning Toray Co., Ltd., Tokyo 100-0005 (JP); The University of Tokyo, Bunkyo-Ku, Tokyo 113-8654 (JP)
(72) Inventor: OGAWA, Takuya c/o Dow Corning Toray Co., Ltd., Ichihara-shi, Chiba 299-0108 (JP); IMAI, Kohei, The University of Tokyo, Tokyo 113-8654 (JP); OSHIMA, Yoshito The University of Tokyo, Tokyo 113-8654 (JP)
(74) Representative: Gillard, Richard Edward
(86) International application number: PCT/JP2006/314716
(87) International publication number: WO 2007/011057

(57) **Abstract**

A method of manufacturing a polysiloxane by subjecting a mixture of water and a silicon-containing compound represented by average structural formula (A):

R¹ₐ(R²O)_{b}SiO_{[(4-a-b)/2]}

(where R¹ designates the same or different optionally substituted univalent hydrocarbon groups; R² is a univalent hydrocarbon group having four or less carbon atoms; and where "a" and "b" are numbers that satisfy the following conditions: 0 ≤ a ≤ 3 ; 0 < b ≤ 4 ; and 0 < a + b ≤ 4) to hydrolysis and condensation at a temperature not less than 200°C and under pressure not less than 2.5 MPa: is a simplified method of manufacturing a polysiloxane with reduced amount of production wastes.

## Description

### Technical Field

The present invention relates to a simple method of manufacturing a polysiloxane with a low environment load. More specifically, the invention relates to a solvent-free method of manufacturing a polysiloxane by a condensation reaction without the use of acidic or basic catalysts.

### Background Art

Due to their excellent properties of light transmittance, electrical insulating properties, optical stability, thermal stability, low temperature resistance, etc., polysiloxane-type raw materials find application in nearly all fields of industries, such as manufacturing of electrical and electronic devices, construction, automotive industry, mechanical engineering, chemistry, biochemistry, etc. The least expensive method of manufacturing polysiloxane is hydrolysis and condensation of chlorosilanes; however, because such a method is characterized by acidic conditions in the system, the product must be neutralized. Alkoxysilanes also can be used as starting materials for the production of polysiloxanes. However, as disclosed in Walter Noll: Chemistry and Technology of Silicones, 2nd Edition, Academic Press, p. 190-245[1968], alkoxysilanes are hydrolyzed at a much slower speed than that of chlorosilanes, and in order to reach a practically acceptable speed of hydrolysis, alkoxysilanes must be additionally combined with acidic or basic compounds. This inevitably dictates the use of an additional step of subsequent neutralization and thus prolongs the production process.

On the other hand, in order to decrease load on the environment, it would be desirable to exclude the use of organic solvents and to reduce as much as possible generation of waste products from the process. When in the production of polysiloxanes a product is a highly viscous liquid or a solid substance, in many cases organic solvents are used to increase productivity. The method disclosed in Japanese Examined Patent Application Publication S63-14013 proposes to eliminate the use of organic solvents by using during polymerization a medium such as carbon dioxide in the state of gas or supercritical liquid. This method does not require the use of organic solvents, but in order to use acidic and basic catalysts, the product must be subject to basic or acidic treatment. Furthermore, Japanese Unexamined Patent Application Publication (hereinafter referred to as "Kokai") 2002-3529 discloses a method of manufacturing a silyl-containing compound by using a supercritical carbon dioxide as the reaction medium. This method involves the use of a supercritical carbon dioxide as a medium for a hydrosilylation reaction that involves the use of a catalyst such as platinum compound. Kokai 2001-49026 and Kokai 2001-81232 describe methods wherein a cross-linked silicone compound waste material is hydrolyzed in contact with a mixed medium of alcohol and water under heating conditions to form a non-cross-linked silicone compound or an oily silicone substance. In the previously mentioned methods, in order to produce polysiloxane the formation of which is accompanied by breaking of siloxane bonds, substituents on silicon atoms of the product are limited to substituents (basically, methyl groups) of cross-linked silicone waste material as a starting material. When two or more substituents are present, it is very difficult to control their ratio in the product. Moreover, it is impossible to produce polysiloxanes with a desired ratio of different bonding patterns, such as bonding patterns of mono-substituted siloxane units, di-substituted siloxane units, etc. Furthermore, a detailed chemical structure and molecular weights of the aforementioned products are not yet completely known. Until the present time no proposals have been made with regard to methods of manufacturing polysiloxanes by forming siloxane bonds as a result of hydrolysis and condensation reaction with the use of non-solvents and non-catalysts.

It is an object of the present invention to provide a simple method of manufacturing a polysiloxane with a reduced amount of production wastes.

### Disclosure of Invention

A method of manufacturing a polysiloxane according to Claim 1 of the invention comprises the step of subjecting a mixture of water and a silicon-containing compound represented by average structural formula (A):

R¹ₐ(R²O)_{b}SiO_{[(4-a-b)/2]}

(where R¹ designates the same or different optionally substituted univalent hydrocarbon groups; R² is a univalent hydrocarbon group having four or less carbon atoms; and where "a" and "b" are numbers that satisfy the following conditions: 0 ≤ a ≤ 3 ; 0 < b ≤ 4 ; and 0 < a + b ≤ 4) to hydrolysis and condensation at a temperature not less than 200°C and under pressure not less than 2.5 MPa.

A method of manufacturing a polysiloxane according to Claim 2 of the invention comprises the step of subjecting a silicon-containing compound represented by average structural formula (B):

R¹_{c}(R²O)_{d}(HO)ₑSiO_{[(4-c-d-e)/2]}

(where R¹ and R² are the same as defined above; and where "c", "d", and "e" are numbers that satisfy the following conditions: 0 ≤ c ≤ 2; 0 < d ≤ 3; 0 < e ≤ 2; and 0 < c + d + e ≤ 4) to condensation at a temperature not less than 200°C and under pressure not less than 0.5 MPa.

A method of manufacturing a polysiloxane according to Claim 3 of the invention comprises the step of subjecting a mixture of water and a silicon-containing compound represented by average structural formula (B):

R¹_{c}(R²O)_{d}(HO)ₑSiO_{[(4-c-d-e)/2]}

(where R¹, R², "c", "d", and "e" are the same as defined above) to hydrolysis and condensation at a temperature not less than 200°C and under pressure not less than 0.5 MPa.

A method of manufacturing a polysiloxane according to Claim 4 of the invention comprises the step of subjecting a mixture of a silicon-containing compound represented by average structural formula (A):

R¹ₐ(R²O)_{b}SiO_{[(4-a-b)/2]}

(where R¹, R², "a", and "b" are the same as defined above) and a silicon-containing compound represented by average structural formula (C):

R¹_{f}(HO)_{g}SiO_{[(4-f-g)/2]}

(where R¹ is the same as defined above, and where "f" and "g" are numbers that satisfy the following conditions: 0 ≤ f ≤ 3; 0 < g ≤ 3; and 0 < f + g ≤ 4) to condensation at a temperature not less than 200°C and under pressure not less than 0.5 MPa.

A method of manufacturing a polysiloxane according to Claim 5 of the invention comprising the step of subjecting a mixture of water with a silicon-containing compound represented by average structural formula (A):

R¹ₐ(R²O)_{b}SiO_{[4-a-b)/2]}

(where R¹, R², "a", and "b" are the same defined above) and with a silicon-containing compound represented by average structural formula (C):

R¹_{f}(HO)_{g}SiO_{[4-f-g)/2]}

(where R¹, "f", and "g" are the same defined above) to hydrolysis and condensation at a temperature not less than 200°C and under pressure not less than 0.5 MPa.

A method of manufacturing a polysiloxane according to Claim 6 of the invention is characterized by feeding water and silicon-containing compounds to a reaction chamber and subjecting them to react in succession in a method according to any of Claims 1, 3, and 5.

A method of manufacturing a polysiloxane according to Claim 7 of the invention is characterized by feeding silicon-containing compounds to a reaction chamber and subjecting the compound to react in succession in a method according to any of Claims 2 and 4.

A polysiloxane according to Claim 8 of the invention is prepared by a method according to any of Claims 1 through 7.

A polysiloxane according to Claim 9 of the invention is characterized by a polysiloxane according to Claim 8 as a precursor for a silicon-containing inorganic compound.

### Effects of Invention

Since according to the method of the invention polysiloxanes are manufactured without conventionally used acidic or basic catalysts, the manufacturing process is simplified and can be carried out without involvement of the undesirable neutralization. As a result, it becomes possible to shorten the production time and to reduce the production cost.

### Brief Description of the Drawings

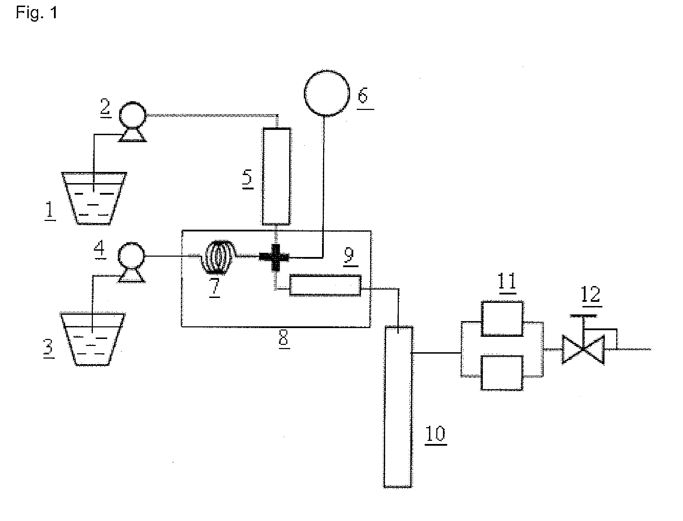

Fig. 1 is a conceptual view of a flow-through reactor used for a manufacturing method of the present invention.

### Reference numerals:

- 1: storage tank for silicon-containing compound
- 2: feeding pump
- 3: storage tank for water
- 4: feeding pump
- 5: heat exchanger
- 6: thermometer
- 7: preheating chamber
- 8: sand bath
- 9: reaction chamber
- 10: collection trap
- 11: in-line filter
- 12: back pressure regulator

### Detailed Description of the Invention

The method of the invention for manufacturing a polysiloxane is characterized by subjecting a silicon-containing compound represented by average structural formula (A):

R¹ₐ(R²O)_{b}SiO_{[(4-a-b)/2]}

to hydrolysis and condensation at a temperature not less than 200°C and under pressure not less than 2.5 MPa. In the above formula, R¹ designates the same or different optionally substituted univalent hydrocarbon group. Such groups can be exemplified by univalent hydrocarbon groups of one or more types selected from univalent aliphatic hydrocarbon groups having 1 to 6 carbon atoms, univalent aromatic hydrocarbons groups having 6 to 10 carbon atoms, univalent substituted aliphatic hydrocarbon groups having 1 to 6 carbon atoms, and univalent substituted aromatic hydrocarbons groups having 6 to 10 carbon atoms. The following are specific examples of saturated univalent aliphatic hydrocarbon groups having 1 to 6 carbon atoms: methyl, ethyl, propyl, butyl, and hexyl groups, of which methyl groups are preferable. Unsaturated univalent aliphatic hydrocarbon groups can be exemplified by vinyl, allyl, and hexenyl groups. Univalent aromatic hydrocarbon groups can be exemplified by phenyl, tolyl, xylyl, and naphthyl groups, of which phenyl groups are preferable. Univalent substituted aliphatic hydrocarbon groups can be exemplified by halogen-substituted hydrocarbon groups such as chloropropyl groups; and hydroxy-substituted hydrocarbon groups such as hydroxypropyl groups. Univalent substituted aromatic hydrocarbon groups can be exemplified by halogen-substituted hydrocarbon groups such as 2-chlorophenyl, 4-chlorophenyl, and 2-chloronaphthyl groups. In the above formula, R² designates a univalent hydrocarbon group with 4 or less carbon atoms. Such groups may be comprised of methyl, ethyl, propyl, isopropyl, butyl, and tertiary butyl groups, of which preferable are methyl groups. In the above formula, "a" and "b" are numbers that satisfy the following conditions: 0 ≤ a ≤ 3 ; 0 < b ≤ 4 ; and 0 < a + b ≤ 4. The greater is "b", the greater is the molecular weight of the obtained polysiloxane.

The following are examples of aforementioned silicon-containing compound (A): trimethylmethoxysilane, dimethylphenylmethoxysilane, methyldiphenylmethoxysilane, dimethyldimethoxysiloxane, methylphenyldimethoxysilane, methylvinyldimethoxysilane, diphenyldimethoxysilane, methyltrimethoxysilane, methyltriethoxysilane, phenyltrimethoxysilane, vinyltrimethoxysilane, tetramethoxysilane, tetraethoxysilane, polydimethylosiloxane capped at both molecular terminals with dimethoxy-functional groups, polydimethylsiloxane capped at both molecular terminals with methyldimethoxy-functional groups, polydimethylsiloxane capped at both molecular terminals with trimethoxy-functional groups, and methoxy-functional silicate oligomer. The aforementioned silicon-containing compounds may be used individually or in a mixture of two or more.

There are no special restrictions with regard to the amount of water that is added for reaction with silicon-containing compound (A), but it is recommended that it should be between 50 mole % and 1500 mole % of groups represented by R²O in the formula of the silicon-containing compound (A). Addition of water in an amount of less than 50 mole % is undesirable because in this case a polysiloxane will be obtained with increased concentration of silanol groups and residual R²O groups. If, on the other hand, water is added in an amount exceeding 1500 mole %, this will lead to increase of pressure in the reaction system and to increase a quantity of recovered excess water.

It is required that the reaction of silicon-containing compound (A) and water be carried out at a temperature not less than 200°C and under pressure not less than 2.5 MPa. If either the temperature or the pressure, or both, is below the recommended lower limit, the reaction will not progress to a sufficient degree. There are no strict upper limits of temperature and pressure, but from the point of view of thermal stability of polysiloxane as a product and a reaction substrate, it is recommended to consider 400°C as the upper limit of temperature. If the reaction pressure is too high, it will be difficult to obtain the polysiloxane product with high molecular weight. Therefore, it is recommended to use 30 MPa as the upper limit for pressure. A preferable temperature range is between 230°C and 370°C, and even more preferably between 250°C and 350°C. A preferable pressure should be between 2.8 MPa and 25 MPa, and, more preferably, between 3.0 MPa and 22 MPa.

There are no significant limitations with regard to the duration of the reaction between silicon-containing compound (A) and water, but it may be recommended that after the reaction temperature reaches the point set for the mixture, the reaction time be chosen in the range of 30 sec. to 30 min. If the reaction time is too short, it will be impossible to provide progress of condensation reaction sufficient for the formation ofpolysiloxane, and if the reaction is too long, this will lead to undesired waste of energy.

There are no special restrictions with regard to the pattern of the reaction between silicon-containing compound (A) and water, and this can be a batch-type reaction or a flow-through-type reaction. In the batch-type reaction, silicon-containing compound (A) and water are fed to reaction chamber, then are generally kept at a predetermined temperature and pressure for a predetermined time. On the other hand, in the flow-through-type reaction, for example, a reactor shouwn by Fig. 1 can be used. In the reactor, silicon-containing compound (A) and water are fed to reaction chamber 9 from each storage tanks 1,3 by each feeding pumps 2,4, then are generally mixed and reacted. Though both ingredients can be fed at ordinary temperature, water can be heated by preheating chamber 7 to reaction temperature, or silicon-containing component (A) can be cooled by heat exchanger 5. Product can be collected by collection trap 10 and solid product can be collected by in-line filter 11. Also, there are no special restrictions with regard to the materials from which a reactor is made since no chlorine-type gases are generated during production. Stainless steel, titanium alloys, or similar materials, are generally used as materials for normal-pressure reactors. There are no restrictions with regard to the heating media, and conventional heating media can be used for high-temperature reactions. Examples of such media are DOWTHERM, an organic heat-exchanging fluid produced by Dow Chemical Co.; BARRELTHERM, an organic temperature controller of Matsumura Oil Co., Ltd., an alkali metal nitrate or similar inorganic fused salts; and sand which is used for sand baths. Though sand bath 8 is used in a flow-through reacter shown by Fig. 1, there is no restrictions with regard to heating means.

The method of the invention for manufacturing polysiloxane consists of subjecting aforementioned compound (A) and water to hydrolysis and condensation reactions at a predetermined temperature and pressure for a predetermined time, and then cooling the product and separating polysiloxane therefrom. A product other than polysiloxane formed in this reaction is alcohol.

According to another embodiment of the method of the invention for manufacturing polysiloxane, a silicon-containing compound represented by average structural formula (B) :

R¹_{c}(R²O)_{d}(HO)ₑSiO_{[(4-c-d-e)/2]}

is subjected to a condensation reaction at a temperature not less than 200°C and under pressure not less than 0.5 MPa. In the above formula, R¹ and R² are the same as designated above. Furthermore, in the above formula, "c", "d" and "e" are numbers that satisfy the following conditions: 0 ≤ c ≤ 2 ; 0 < d ≤ 3 ; 0 < e ≤ 2 ; and 0 < c + d + e ≤ 4, preferably the following conditions: 1 ≤ c ≤ 2; 0.1 ≤ d ≤ 2; 0.05 < e ≤ 2; and 1.15 < c + d + e ≤ 4.

The following are specific examples of silicon-containing compound (B): products of partial hydrolysis of dimethyldimethoxysilane, products of partial hydrolysis of dimethyldiethoxysilane, products of partial hydrolysis of methylphenyldimethoxysilane, products of partial hydrolysis of methylvinyldimethoxysilane, products of partial hydrolysis of diphenyldimethoxysilane, products of partial methoxylation of polydimethylsiloxane capped at both molecular terminals with OH-functional groups, products of partial hydrolysis of polydimethylsiloxane capped at both molecular terminals with methoxy-functional groups, products of partial hydrolysis of polydimethylsiloxane capped at both molecular terminals with dimethoxy-functional groups, products of partial hydrolysis of polydimethylsiloxane capped at both molecular terminals with trimethoxy-functional groups, products of partial hydrolysis of methyltrimethoxysilane, products of partial hydrolysis of methyltriethoxysilane, products of partial hydrolysis of phenyltrimethoxysilane, products of partial hydrolysis ofvinyltrimethoxysilane, products of partial hydrolysis of tetramethoxysilane, products of partial hydrolysis of tetraethoxysilane, and products of partial hydrolysis of methoxy-functional silicate oligomers. The aforementioned compounds can be used individually or in combination of two or more.

Aforementioned silicon-containing compound (B) can be subjected to hydrolysis and condensation alone but preferably in the presence of water. Due to the structure of aforementioned silicon-containing compound (B), the reaction with water makes it possible to obtain a polysiloxane of high molecular weight. There are no special restrictions with regard to an amount of water that should be present in such a reaction; however, in general, water should be present in an amount between 10 mole % and 1500 mole % of groups represented by R²O in the formula of the silicon-containing compound (B). If water is present in an amount less than 10 mole %, the effect of increase in the molecular weight will be insignificant, and if the amount of water exceeds 1500 mole %, this will lead to a significant increase of pressure in the reaction system.

In the case of silicon-containing compound (B), the reaction should be carried out at a temperature not less than 200°C and under pressure not less than 0.5 MPa. If either temperature or pressure, or both, is below the recommended lower limit, the reaction will have insufficient progress. There are no special restrictions with regard to the upper limit of temperature or pressure, but regarding thermal stability of the reaction substrate or polysiloxane as a product, the upper temperature limit can be established at 400°C. If the reaction pressure is too high, it will be difficult to obtain the polysiloxane product with high molecular weight. Therefore, it is recommended to use 30 MPa as the upper limit for pressure. A preferable temperature range is between 230°C and 370°C, and even more preferably, between 250°C and 350°C. The preferable pressure should be between 0.8 MPa and 25 MPa, and, more preferably, between 1.0 MPa and 22 MPa. There are no special restrictions with regard to the duration of the reaction conducted with participation of silicon-containing compound (B), as well as with regard to the reaction pattern, materials of the reactor, heating medium used for heating, and method of separating the obtained polysiloxane. All of these factors are to be chosen with reference to the same conditions as mentioned above. If silicon-containing compound (B) is reacted by the flow-through-type reaction, a reactor, which is shown by Fig. 1 with exception of water storage tank 3, feeding pump 4, and preheating chamber 7, can be used.

According to another embodiment of the invention, a method of manufacturing a polysiloxane is carried out by subjecting a mixture of a silicon-containing compound represented by average structural formula (A):

R¹ₐ(R²O)_{b}SiO_{[(4-a-b)/2]}

and a silicon-containing compound represented by average structural formula (C):

R¹_{f}(HO)_{g}SiO_{[(4-f-g)/2]}

to condensation at a temperature not less than 200°C and under pressure not less than 0.5 MPa. In the above formula, R¹ and R² designate the same groups as defined above. Furthermore, "f" and "g" are numbers that should satisfy the following conditions: 0 ≤ f ≤ 3; 0 < g ≤ 3; and 0 < f + g ≤ 4.

The last-mentioned silicon-containing compound (A) are exemplified by the same compounds as mentioned earlier. These compounds can be used individually or in a mixture of two or more. Silicon-containing compound (C) is represented by the following specific examples: trimethylsilanol, dimethylphenylsilanol, methyldiphenylsilanol, diphenylsilanediol, hexaphenyltrisiloxane-1,5-diol, polydimethylsiloxane capped at both molecular terminals with OH-functional groups, polymethylphenylsiloxane capped at both molecular terminals with OH-functional groups, phenylsilanetriol, products of hydrolysis of methyltrimethoxysilane, products of hydrolysis of methyltriethoxysilane, products of hydrolysis ofphenyltrimethoxysilane, products of hydrolysis ofvinyltrimethoxysilane, and water-dispersed colloidal silica. Silicon-containing compound (C) can be used individually or in mixtures of two or more.

A mixture of silicon-containing compound (A) and silicon-containing compound (C) can be supplied to the reaction as is, but water is necessary for hydrolysis and condensation reactions. Due to the specific structure and mixture ratio of silicon-containing component (A) and silicon-containing compound (C) and as a result of reaction with water, a polysiloxane may be obtained with high molecular weight. There are no special restrictions for the amount of water necessary for such a reaction, but, in general, it should be between 10 mole % and 1500 mole % of R²O groups in the formula of compound (A). If water is added in an amount less than 10 mole %, the effect of increase in molecular weight will be insignificant, and if the amount of added water is more than 1500 mole %, this will lead to increase of pressure in the reaction system and to increase of recovered excess water.

For the same reasons as described above with regard to embodiment where only compound (A) participated in the reaction, in the case of the mixture of silicon-containing compound (A) and silicon-containing compound (C), the reaction should be carried out at a temperature not less than 200°C and under pressure not less than 0.5 MPa. It is preferable that the reaction temperature be between 200 and 370°C, and even more preferably, between 250 and 350°C. The recommended pressure range is 0.8 MPa to 25 MPa, preferably 1.0 MPa to 22 MPa. There are no special restrictions with regard to the duration of the reaction conducted with participation of the mixture of silicon-containing compounds (A) and (B), as well as with regard to the reaction pattern, materials of the reactor, heating medium used for heating, and method of separating the obtained polysiloxane. All of these factors are to be chosen with reference to the same conditions as mentioned above.

The polysiloxane of the invention is characterized by being produced according to the methods described above. Since the aforementioned polysiloxane is produced without the use of acidic or basic catalysts normally employed in conventional methods for manufacturing polysiloxane, the process does not require the neutralization step, and the product does not contain a catalytic residual or neutral salts. Therefore, it is expected that the product will possess excellent resistance to heat and improved electrical properties.

### Examples

The polysiloxane of the invention and method of manufacturing thereof will further be described in more detail with reference to application and comparative examples. Molecular weight measurement and identification of the polysiloxane are as follows.

### [Molecular Weight of the Polysiloxane]

Molecular weight of the obtained polysiloxane was determined by calculating a relative value with regard to a polystyrene standard sample of weight average molecular weight by using the high-speed GPC chromatograph HLC-8020 available from Tosoh Corporation with chloroform as an eluate.

### [Heat-Resisting Property of the Polysiloxane]

Heat-resisting property of the obtained polysiloxane was evaluated by measuring weight percentage of residue after heated to 800°C with heating speed of 10°C/min. in air by using a thermobalance TGA-50 from Shimadzu Corporation.

### [Chemical Structure of the Polysiloxane]

The chemical structure of the obtained polysiloxane was analyzed by measuring infrared absorption spectra with the use of a Fourier transform infrared spectrophotometer FT/IR-5300 of Japan Spectroscopic Co., Ltd. and by measuring ¹³C-NMR and ²⁹Si-NMR spectra in deuterated acetone with the use of the high-resolution NMR analyzer ACP 300 produced by Bruker Biospin Corp. In the NMR measurements, tetramethylsilane was used as a standard substance for calculating the NMR frequency shift values.

### [Application Example 1]

A reaction tube made from stainless steel SUS 316 equipped with a pressure sensor and having an inner diameter of 10 mm and a capacity of 9.6 cm³ was loaded with 3 ml ofphenyltrimethoxysilane and 1.5 ml of water, and then the tube was sealed. The mixture was immersed into a sand bath heated to 250°C, and after heating for 15 min., the content was cooled in a water bath, and the reaction tube was opened. During heating, the inner pressure in the reaction tube was equal to 3.7 MPa. The obtained product comprised a phase-separated mixture of a solid white substance and a colorless, transparent liquid. This liquid comprised an aqueous methanol solution. The IR- and NMR-spectrum data shown below confirmed that the solid substance comprised a phenylsilsesquioxane that contained OH groups and methoxy groups. Based on the weight of the starting material, it could be calculated that the separation yield of the product was equal to 92 %; the molecular weight was 9,700.
IR (cm⁻¹) : 3,650; 3,050; 1,595; 1,420; 1,100;
¹³C-NMR (ppm) : 50.9; 128.4; 131.3; 134.5;
¹⁹Si-NMR (ppm): -77.7; -69.4

### [Application Example 2]

The reaction was carried out in the same manner as in Application Example 1, except that the reaction temperature was 300°C, and the reaction duration was 10 min. During heating, pressure in the reaction tube was 4.3 MPa. Similar to Application Example 1, the obtained product comprised a phase-separated mixture. The IR and NMR spectra of the solid substance were the same as in the case of Application Example 1, and the solid substance comprised a phenylsilsesquioxane having OH and methoxy groups. The separation yield was 92 %, and the molecular weight was 13,600.

### [Application Example 3]

The reaction was carried out in the same manner as in Application Example 1, except that phenyltrimethoxysilane was used in an amount of 4 ml, water was used in an amount of 2 ml, the reaction temperature was 350°C, and the reaction duration was 10 min. During heating, pressure in the reaction tube was 14.3 MPa. Similar to Application Example 1, the obtained product comprised a phase-separated mixture. The IR and NMR spectra of the solid substance were the same as in the case of Application Example 1, and the solid substance comprised a phenylsilsesquioxane having OH and methoxy groups. The separation yield was 82 %, and the molecular weight was 2,900.

### [Application Example 4]

The reaction was carried out in the same manner as in Application Example 1, except that the reaction substrate comprised 2.5 ml of tetramethoxysilane, water was used in an amount of 1.83 ml, and the reaction duration was 10 min. During heating, pressure in the reaction tube was 13.5 MPa. Similar to Application Example 1, the obtained product comprised a phase-separated mixture. The solid substance did not dissolve in the organic solvent. The IR and NMR spectra confirmed that the obtained product comprised silicon dioxide having OH groups. The separation yield was 99 %.
IR (cm⁻¹): 3,410; 1,100; 965;
¹⁹Si-NMR (ppm): -107.4; -97.9; -88.6

### [Application Example 5]

The reaction was carried out in the same manner as in Application Example 1, except that the reaction substrate comprised a mixture of 0.51 ml of methyltrimethoxysilane and 2 ml of phenyltrimethoxysilane, water was used in an amount of 1.16 ml, the reaction temperature was 300°C, and the reaction duration was 10 min. During heating, pressure in the reaction tube was 12.0 MPa. Similar to Application Example 1, the obtained product comprised a phase-separated mixture. Based on the data of IR and NMR spectra given below, it was confirmed that the solid-substance product comprised a copolymer of phenylsilsesquioxane and methylsilsesquioxane that contained OH groups and methoxy groups. A copolymer component ratio (mole ratio) was 25/75. The separation yield was 89 %, and the molecular weight was 1,780.
IR (cm⁻¹) : 3,650; 3,050; 2,970; 1,595; 1,420; 1,100;
¹³C-NMR (ppm): -3.1; 50.7; 128.5; 131.3; 134.5;
²⁹Si-NMR (ppm): -79.6; -71.0; -65.1; -56.2

### [Application Example 6]

The reaction was carried out in the same manner as in Application Example 1, except that the reaction substrate in the form of a siloxane represented by the following average structural formula:

(C₆H₅)₁(CH₃O)₁(HO)_{2/3} SiO_{2/3}

in an amount of 7 ml, the reaction temperature was 300°C, and the reaction duration was 10 min. During heating, pressure in the reaction tube was 3.5 MPa. Similar to Application Example 1, the obtained product comprised a phase-separated mixture. The IR and NMR spectra were the same as in Application Example 1 and confirmed that the solid-substance product comprised a phenylsilsesquioxane having OH groups and methoxy groups. The separation yield was 95 %, and the molecular weight was 2,100.

### [Application Example 7]

The reaction was carried out in the same manner as in Application Example 1, except that the reaction substrate in the form of a siloxane represented by the following average structural formula:

(C₆ H₅)₁(CH₃O)₁(HO)_{2/3} SiO_{2/3}

in an amount of 6 ml, water was used in an amount of 1 ml, the reaction temperature was 300°C, and the reaction duration was 10 min. During heating, pressure in the reaction tube was 8.0 MPa. Similar to Application Example 1, the obtained product comprised a phase-separated mixture. The IR and NMR spectra were the same as in Application Example 1 and confirmed that the solid-substance product comprised a phenylsilsesquioxane having OH groups and methoxy groups. The separation yield was 92 %, and the molecular weight was 3,400.

### [Application Example 8]

The reaction was carried out in the same manner as in Application Example 1, except that the reaction substrate comprised a mixture of 4.08 ml of polydimethylsiloxane capped at both molecular terminals with hydroxyl functional groups and having an average degree of polymerization equal to 13 and 0.97 ml of methylphenyldimethoxysilane; the reaction temperature was 300°C, and the reaction duration was 10 min. During heating, pressure in the reaction tube was 0.9 MPa. The product comprised a uniform oily substance. Based on the data of IR and NMR spectra given below, it was confirmed that the product comprised a copolymer ofphenylmethylsiloxane and dimethylsiloxane with methoxy groups and OH groups on the polymer terminals. The copolymer component ratio (mole ratio) was 91/9. The separation yield was 99 %, and the molecular weight was 2,100.
IR (cm⁻¹) : 3,650; 3,050; 2,970; 1,595; 1,420; 1,100;
¹³C-NMR (ppm): 1.2; 50.9; 128.4; 131.3; 134.5;
²⁹Si-NMR (ppm): -24.7; -21.8; -20.7; -19.0; -14.0; -11.5

### [Application Example 9]

The reaction was carried out in the same manner as in Application Example 1, except that the reaction substrate comprised a mixture of 0.81 ml of polydimethylsiloxane capped at both molecular terminals with hydroxyl functional groups and having an average polymerization degree of 13 and 2 ml of phenyltrimethoxysilane, water was used in an amount of 0.87 ml, the reaction temperature was 300°C, and the reaction duration was 10 min. During heating, pressure in the reaction tube was 9.0 MPa. Similar to Application Example 1, the obtained product comprised a phase-separated mixture. The IR and NMR spectra were the same as in Application Example 1 and confirmed that the solid-substance product comprised a copolymer ofphenylsilsesquioxane and dimethylsiloxane with methoxy groups and OH groups. The copolymer component ratio (mole ratio) was 50/50. The separation yield was 88 %, and the molecular weight was 3,280.
IR(cm⁻¹): 3,650; 3,050; 2,970; 1,595; 1,420; 1,100;
¹³C-NMR (ppm): 1.1; 50.9; 128.4; 131.3; 134.5;
¹⁹Si-NMR (ppm): -79.0; -71.2; -21.7; -13.9; -11.4

### [Application Example 10]

A flow-through reactor shown by Fig. 1. was used. Phenyltrimethoxysilane with feeding speed of 1 ml/min. and water with feeding speed of 2 ml/min. were fed sepatrately to a reaction chamber having a capacity of 15 ml and kept at 250°C and 6 MPa. A reaction was stopped after feeding for 20 min. The obtained product comprised a phase-separated mixture of a solid white substance and a colorless, transparent liquid. The IR and NMR spectra of the solid substance were the same as in the case of Application Example 1, and the solid substance comprised a phenylsilsesquioxane having OH and methoxy groups. The molecular weight was 4,100.

### [Application Example 11]

Phenylsilsesquioxanes obtained by Application Examples 1 and 2 were heated to 800°C. Each weight percentage of residue after heated is 47.5 % and 46.5 % per weight of phenylsilsesquioxane before heated. These values are good agreement with the values of the conversion ratio of the polysiloxane from chemical structure to calculated silicon oxide.

### [Comparative Example 1]

The process was carried out similar to Application Example 1, with the exception that the reaction temperature was 300°C, and that 3 ml of phenyltrimethoxysilane were loaded into the reactor without addition of water. During heating, pressure in the reaction tube was 0.4 MPa. The fact that the product comprised phenyltrimethoxysilane confirmed that a reaction did not occur.

### [Comparative Example 2]

The reaction was carried out in the same manner as in Application Example 1, except that the phenyltrimethoxysilane was used in an amount of 2 ml, water was added in an amount of 1 ml, and the reaction temperature was 300°C. During heating, pressure in the reaction tube was 1.1 MPa. The obtained product comprised a two-liquid type phase-separated mixture. The organic-phase liquid comprised a polymer with a molecular weight of 1,500. However, gas chromatography analysis revealed a large amount of residual phenyltrimethoxysilane. This result testified to the fact that hydrolysis did not have sufficient progress.

### [Comparative Example 3]

A phenylsilsesquioxane with a molecular weight of 11,000 was obtained from phenyltrimethoxysilane as starting material in the same manner as a manufacturing method described in Application Example in Kokai 2005-179541. This phenylsilsesquioxane was heated to 800°C. Weight percentage of residue after heated is 28.0 % per weight of phenylsilsesquioxane before heated. Since the value was significantly lower than the values of the conversion ratio of the polysiloxane from chemical structure to calculated silicon oxide, it was know that heat-resisting property of the phenylsilsesquioxane was poor.

### Industrial Applicability

The invention is effective since the manufacturing method of the invention can be carried out without a neutralization step, and the process is simplified with a reduced amount of production wastes, whereby it becomes possible to shorten the polysiloxane production time and reduce the production cost. The use of a condensation reaction makes it possible to produce polysiloxane with different desirable bonding ratios. Furthermore, since the method of the invention for manufacturing polysiloxanes does not use organic solvents, the manufacturing process does not generate liquid organic wastes and therefore produces low impact on the environment. On the other hand, the polysiloxane produced by the methods of the invention does not contain a catalytic residual or neutral salts, whereby excellent resistance to heat and improved electrical properties of it are expected, and it is useful for a precursor of silicon-containing inorganic compound such as silicon oxide, silicon nitride, etc.

## Claims

1. A method of manufacturing a polysiloxane by subjecting a mixture of water and a silicon-containing compound represented by average structural formula (A):
R¹ₐ(R²O)_{b}SiO_{[(4-a-b)/2]}
(where R¹ designates the same or different optionally substituted univalent hydrocarbon groups; R² is a univalent hydrocarbon group having four or less carbon atoms; and where "a" and "b" are numbers that satisfy the following conditions: 0 ≤ a ≤ 3; 0 < b ≤ 4; and 0 < a + b ≤ 4) to hydrolysis and condensation at a temperature not less than 200°C and under a pressure not less than 2.5 MPa.

2. A method of manufacturing a polysiloxane by subjecting a silicon-containing compound represented by average structural formula (B):
R¹_{c}(R²O)_{d}(HO)ₑSiO_{[(4-c-d-e)/2]}
(where R¹ designates the same or different optionally substituted univalent hydrocarbon groups; R² is a univalent hydrocarbon group having four or less carbon atoms; and where "c", "d" and "e" are numbers that satisfy the following conditions: 0 ≤ c ≤ 2 ; 0 < d ≤ 3 ; 0 < e ≤ 2 ; and 0 < c + d + e ≤ 4) to condensation at a temperature not less than 200°C and under pressure not less than 0.5 MPa.

3. A method of manufacturing a polysiloxane by subjecting a mixture of water and a silicon-containing compound represented by average structural formula (B):
R¹_{c}(R²O)_{d} (HO)ₑ SiO_{[(4-c-d-e)/2]}
(where R¹ designates the same or different optionally substituted univalent hydrocarbon groups; R² is a univalent hydrocarbon group having four or less carbon atoms; and where "c", "d" and "e" are numbers that satisfy the following conditions: 0 ≤c≤2; 0<d≤3; 0<e≤2; and 0<c+d+e≤4) to hydrolysis and condensation at a temperature not less than 200°C and under pressure not less than 0.5 MPa.

4. A method of manufacturing a polysiloxane by subjecting a mixture of a silicon-containing compound represented by average structural formula (A):
R¹ₐ(R²O)_{b}SiO_{[(4-a-b)/2]}
(where R¹ designates the same or different optionally substituted univalent hydrocarbon groups; R² is a univalent hydrocarbon group having four or less carbon atoms; and where "a" and "b" are numbers that satisfy the following conditions: 0 ≤ a ≤ 3; 0 < b ≤ 4; and 0 < a + b ≤ 4) and a silicon-containing compound represented by average structural formula (C):
R¹_{f}(HO)_{g}SiO_{[(4-f-g)/2]}
(where R¹ is the same as defined above, and where "f" and "g" are numbers that satisfy the following conditions: 0 ≤ f ≤ 3 ; 0 < g ≤ 3 ; and 0 < f+ g ≤ 4) to condensation at a temperature not less than 200°C and under pressure not less than 0.5 MPa.

5. A method of manufacturing a polysiloxane by subjecting a mixture of water with a silicon-containing compound represented by average structural formula (A):
R¹ₐ(R²O)_{b}SiO_{[(4-a-b)/2]}
(where R¹ designates the same or different optionally substituted univalent hydrocarbon groups; R² is a univalent hydrocarbon group having four or less carbon atoms; and where "a" and "b" are numbers that satisfy the following conditions: 0 ≤ a ≤ 3; 0 < b ≤ 4; and 0 < a + b ≤ 4) and with a silicon-containing compound represented by average structural formula (C):
R¹_{f}(HO)_{g}SiO_{[(4-f-g)/2]}
(where R¹ is the same as defined above, and where "f" and "g" are numbers that satisfy the following conditions: 0 ≤ f ≤ 3; 0 < g ≤ 3; and 0 < f + g ≤ 4) to hydrolysis and condensation at a temperature not less than 200°C and under pressure not less than 0.5 MPa.

6. A method of manufacturing a polysiloxane according to any of Claims 1, 3, and 5, wherein water and silicon-containing compounds are fed to a reaction chamber and reacted in succession,

7. A method of manufacturing a polysiloxane according to any of Claims 2 and 4, wherein silicon-containing compounds are fed to a reaction chamber and reacted in succession.

8. A polysiloxane prepared by a method according to any of Claims 1 through 7.

9. A polysiloxane according to Claim 8, wherein the polysiloxane is a precursor for a silicon-containing inorganic compound.
